Europäisches Patentamt

European Patent Office

Office européen des brevets

(11) Publication number: **0 323 222**
**A2**

## EUROPEAN PATENT APPLICATION

(21) Application number: 88312357.2

(22) Date of filing: 28.12.88

(51) Int. Cl.⁴: **H 04 L 11/00**
**H 04 B 7/185**

(30) Priority: 25.12.87 JP 331485/87

(43) Date of publication of application:
05.07.89 Bulletin 89/27

(84) Designated Contracting States: DE FR GB SE

(71) Applicant: NEC CORPORATION
33-1, Shiba 5-chome, Minato-ku
Tokyo 108 (JP)

(72) Inventor: Tsuzuki, Kazuo
c/o NEC CORPORATION 33-1, Shiba 5-chome
Minato-ku Tokyo (JP)

(74) Representative: Orchard, Oliver John
JOHN ORCHARD & CO. Staple Inn Buildings North High
Holborn
London WC1V 7PZ (GB)

(54) System for sending and receiving a HDLC data frame on a time-division multiplex transmission path.

(57) A system for sending and receiving a HDLC data frame on a time-division multiplex transmission path includes send control means for reading send data out of a data memory for each send channel in a time-division manner within a period of time allocated for the pertinent channel, for reading out of a send work memory means control information concerning the channel through which sending has been completed within the said period of time to achieve send control and, after editing m-bit data for the current sending, for updating the control information in the send work memory with respect to the currently send data, and receive control means for achieving receive control for each receive channel in a time-division manner within a period of time allocated for the pertinent channel, reading out of a receive work memory control information concerning the channel through which reception has been completed within the period of time allocated, achieving receive control over m-bit data for the current reception and updating the control information in the receive work memory with respect to the currently received data.

Fig.1.

Bundesdruckerei Berlin

**Description**

# SYSTEM FOR SENDING AND RECEIVING A HDLC DATA FRAME ON A TIME-DIVISION MULTIPLEX TRANSMISSION PATH

## BACKGROUND OF THE INVENTION

The present invention relates to a system for sending and receiving a data frame on a time-division multiplex (hereunder referred to as "TDM") transmission path and, more particularly, to a system for send and receive of high-level data link-controlled (HLDC) data frames transmitted and received on a TDM path.

Description of the Prior Art

Known systems for data communication between a computer and a private branch exchange (PBX) or between computers include the digital multiplex interface (DMI) system proposed by American Telephone and Telegraph (AT&T) Company and the computer-PBX interface (CPI) system proposed by Digital Equipment Corp. (DEC).

Among them, the DMI system is particular uses a TDM system because a plurality of HDLC lines are accommodated in a single physical line, and HDLC data frames are carried on each of the TDM channels.

In this DMI system for sending and receiving a HDLC data frame, the sending and receiving of data are usually achieved by separating n-channels of a TDM path once into individual paths with a demultiplexer and using HDLC-data- frame-send-and-receive-circuits for n-channels, for instance, 32 such circuits per an individual path.

This conventional system however, requires as many HDLC-data-frame-send-and-receive-circuits as the number of TDM channels, inviting an increased mounted area and a greater cost.

There also are disclosed in the U.S. Patents Nos. 4,531,211 and 4,531,212, Systems each using a single-HDLC-data-frame-send-and-receive-circuit to make possible the sending and receiving of HDLC data frames on each channel of a TDM path. These systems, however, require a large number of multi-bit shift registers to control the transmission and reception of bit streams in series. Since each of such shift registers is composed of a vast number of gates, it is difficult to use an ordinary gate array circuit, and an LSI (large scale integration) technique is instead needed exclusively for the purpose to invite a consequent cost increase.

## SUMMARY OF THE INVENTION

An object of the present invention is, therefore, to solve the above-mentioned problems by achieving in a time-division manner the send and receive control over each channel with a single-common-and-receive-control-circuit for all the channels and provide a data-frame-sending-and-receiving-system which makes it possible to send a receive HDLC data and to reduce the hardware mounting area without having a separate a TDM path into individual paths.

Another object of the invention is to provide a data-frame-sending-and-receiving-system which can achieve cost reduction by storing in a general-purpose memory various information concerning the send and receive control over individual channels executed in a time-division manner.

In order to achieve the above stated objectives, a system for sending and receiving a HDLC data frame on a TDM transmission path according to the invention comprises:

a first m-bit shift register for serial-to-parallel conversion of n-channel (n is a natural number) multiplexed serial receive data, inputted via a TDM signal path, for each of m-bit receive channels;

a second m-bit shift register for parallel-to-serial conversion of n-channel multiplexed parallel send data for each of m-bit send channels and outputting the converted data to a multiplex signal path;

data memory means for storing send data and receive data for each of said n-send and receive channels;

send control command memory means for storing send control commands including a sending instruction and information concerning the location of send data on said data memory means for each of said n-send channels;

receive control command memory means for storing receive control commands including a receiving instruction and information concerning the location of receive data on said memory means for each of said n-receive channels;

send work memory means for storing control information required in processing the sending of said send data in a time-division manner for each of said n-send channels;

receive work memory means for storing control information required in processing the receiving of said receive data in a time-division manner for each of said n-receive channels;

receive control means for inputting from said first shift register receive data of each receive channel at m-bit intervals, achieving receive control in an HDLC procedure and storing the data in said memory means; and

send control means for reading out of said data memory means send data of each send channel at m-bit intervals, achieving send control in an HDLC procedure and outputting the data to said second shift register;

wherein said send control means, so that send control for each send channel can be achieved in a time-division manner within the period of time allocated for the pertinent channel, reads out of said send work memory means said control information concerning the channel through which sending has been completed within said period of time, achieves send control and, after editing m-bit data for the current sending, updates said control information in said send work memory with respect to said currently sent data, and

said receive control means, so that receive control for each receive channel can be achieved in a time-division manner within the period of time allocated for the pertinent channel, reads out of said receive work memory said control information concerning the channel through which reception has been completed within said period of time, achieves receive control over the m-bit data for the current reception and updates said control information in said receive work memory with respect to said currently received data.

BRIEF DESCRIPTION OF THE DRAWINGS

The above stated objects and features of the present invention will become more apparent from the following detailed description when taken in conjunction with the accompanying drawings, in which:

FIG. 1 is a block diagram showing a preferred embodiment of the invention;

FIGS. 2(a) and 2(b) are diagrams showing the frame composition on TDM lines in the embodiment and the data frame format on each TDM channel, respectively;

FIG. 3 is a flow chart outlining the sending operation in FIG.1;

FIG. 4 is a flow chart outlining the receiving operation in FIG. 1;

FIGS. 5, 6, 7 and 8 are diagrams showing the internal compositions of the memories 6, 7, 8 and 9 in FIG. 1, respectively;

FIG. 9 is a block diagram showing further details of FIG. 1;

FIGS. 10A to 10E are flow charts showing further details of the sending operation in FIG. 9;

FIG. 11 is a diagram for describing an example of sending operation;

FIGS. 12A and 12B are flow charts showing further details of the receiving operation in FIG. 9; and

FIG. 13 is a diagram for describing an example of receiving operation.

In these drawings, the same reference numerals denote respectively the same structural elements.

DESCRIPTION OF THE PREFERRED EMBODIMENT

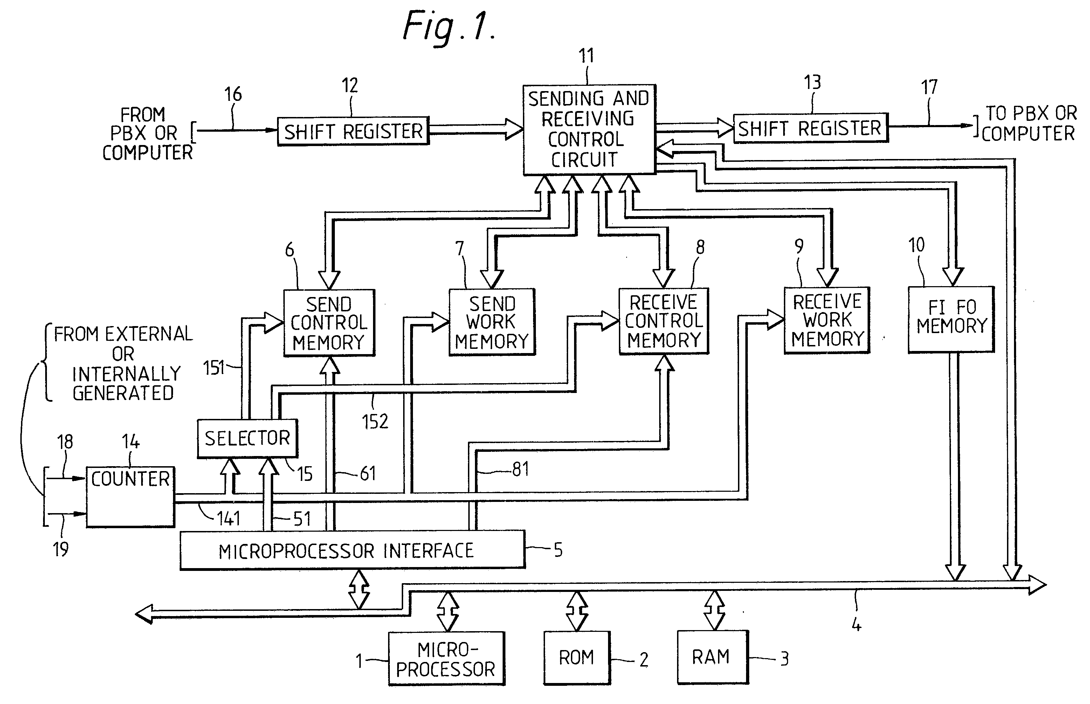

Referring to FIG. 1, a preferred embodiment of the present invention has an 8-bit shift register 12 for serial-to-parallel converting 32-channel (CH0 to CH31) multiplexed receive data on a channel-by-channel (8-bit) basis via an input TDM signal line 16; an 8-bit shift register 13 for parallel-to-serial converting 8-bit parallel send data and supplying them to an output TDM signal line 17; a memory (RAM) 3 for storing 32-channel send and receive data into respectively allocated areas; a send control memory (SCM) 6 and a receive control memory (RCM) 8 for storing control commands respectively required for achieving send control and receive control over data on each of 32 send and receive channels; a send work memory (SWM) 7 and a receive work memory (RWM) 9 for storing on a channel-by-channel basis control information respectively required for achieving send control and receive control over 32-channel send data and receive data in accordance with an HDLC procedure in a time-division manner; and a send and receive control circuit 11 for reading out of or writing into these memories 6, 7, 8 and 9 the control commands and control information, and sending or receiving 32-channel multiplexed data in accordance with the HDLC procedure.

The embodiment also has a counter 14 supplied with a frame pulse 18 and a clock pulse 19, either sent from the other party's apparatus or internally generated, counting their numbers of channels and outputting the resultant counts; a microprocessor 1 connected to a microprocessor bus 4 for controlling the memories 3, 6, 7, 8 and 9 and the circuit 11; a memory (ROM) 2 for this microprocessor 1; a microprocessor interface 5 connected to the bus 4; an event reporting FIFO memory 10 for reporting the completion of the sending or receiving of a series of HDLC data frames by the circuit 11 to the processor 1 via the bus 4; and a selector 15 supplied with a count output 141 of the counter 14 and address data 51 from the interface 5, and alternately switching between and supplying an address 151 to the SCM 6 and an address 152 to the RCM 8.

Into the SCM 6 and the RCM 8 are written control commands 61 and 81 (the addresses on the RAM 3, data lengths and so forth of the data to be sent or received) via the bus 4 and the interface 5, and these commands are read out by the circuit 11 as required. The SWM 7 and the RWM 9, supplied with the count output 141 as the address, read or write control information required by the circuit 11 for HDLC send and receive processing in a time-division manner on a channel-by-channel basis. The control information includes the state of each channel, interim results of cyclic redundancy check (CRC) operations and "0" insert/delete information.

The counter 14 counts every time eight clock pulses 19 are inputted and, by being reset by a leading frame pulse 18 of a time-division frame, repeats counting from 0 to 31 correspondingly to the channel number.

First will be described the basic operation of this preferred embodiment. Basically, this is a time-division multiplexing process. The circuit 11, having a reentrant circuit configuration, starts send processing by reading the i-th word (corresponding to the i-th channel) of the SCM 6 and the i-th word of the SWM 7 between given points of time $t_i$ and $(t_i + \Delta t/2)$, reads from the RAM 3 the data to be sent, writes them into the shift register 13, and writes into (updates) the i-th word of the SWM 7 the interim result of the send processing control.

It also starts receive processing by reading the i-th word (corresponding to the i-th channel) of the RCM 8, the i-th word of the RWM 9 and the content of the shift register 12 between points of time $(t_i + \Delta t/2)$ and $(t_i + \Delta t)$, writes into the RAM 3 the receive data, and writes into the i-th word of the RWM 9 the interim result of the receive processing control. Here the point of time ($t_i + \Delta t$) being equal to $t_{i+1}$, the circuit 11 achieves, during the next period between $t_{i+1}$ and ($t_{i+1} + \Delta t$), send processing for the (i+1)-th channel by using the (i+1)-th words of the SCM 6 and the SWM 7 and receive processing for the (i+1)-th channel by using the (i+1)-th words of the RCM 8 and the RWM 9. The i-th and the (i+1)-th words of the memories 6 to 9 respectively correspond to the i-th and the (i+1)-th time-division channels. The value of i is cyclic, so that i = 32 is the same as i = 0, and $\Delta t$ is equal to the time interval equivalent to one channel of TDM frames (i.e. eight clock pulses 19).

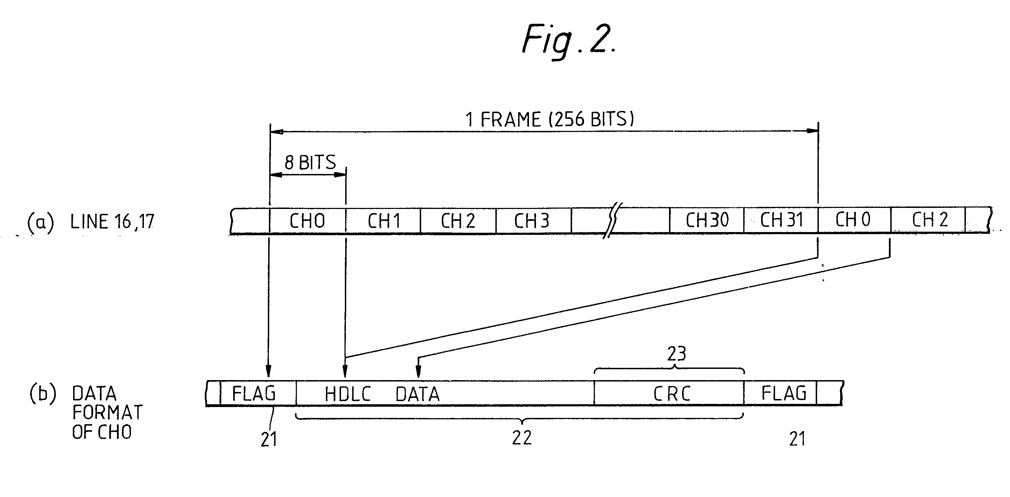

FIG.2(a) illustrates the data frame composition on TDM lines which the present invention concerns. A series of bit streams (FIG. 2(b)), each collected from one (channel 0 for example) of the channels, constitute an HDLC data frame. Thus there are formed a flag 21 having a bit pattern of "01111110" and an HDLC data section 22 in which a bit "0" is inserted after every five consecutive data "1", and the last two bytes (16 bits) of this data section constitute a bit stream 23 for CRC.

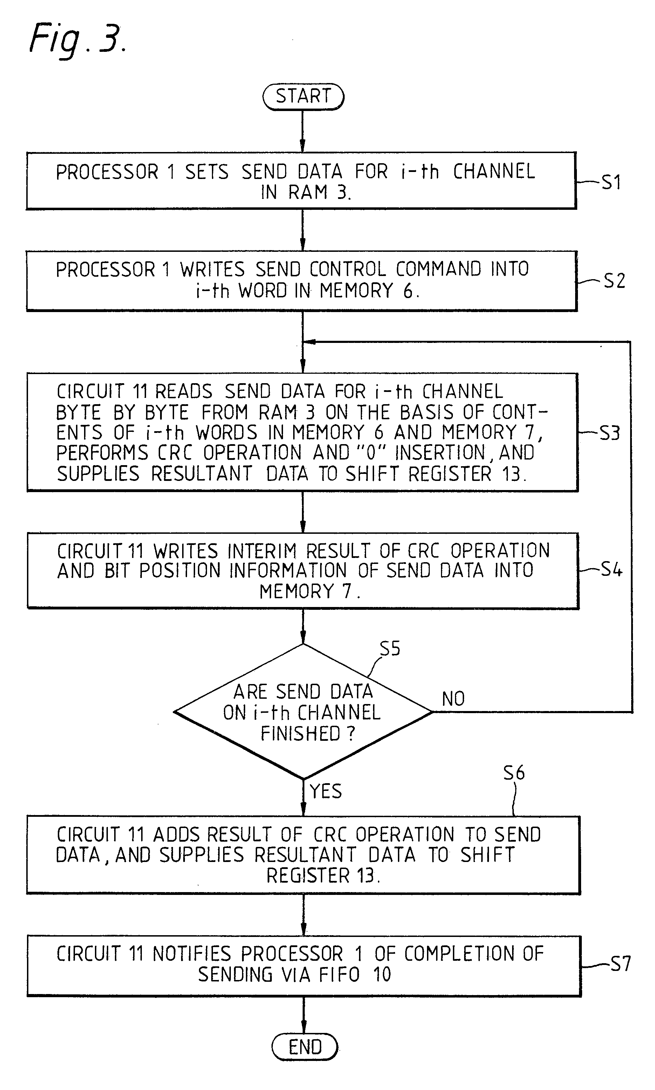

Next will be outlined the send operation with reference to FIG. 3. The microprocessor 1 sets send data in the RAM 3 (step S1). Data sending is started by writing a send control command from the microprocessor 1 into the SCM 6 (step S2). The SCM 6 has a 32-word structure, in which each word corresponds to each time-division channel number (to be explained in further detail below). If, for instance, a send control command is written into the fifth word of the SCM 6, it will mean send starting on the fifth time-division channel. The SWM 7 is provided for temporary storage of control information for send operation, since the period of time allowed for each action of send operation control per channel is limited ($\Delta t/2$) as stated above, with the i-th word of the SWM 7 corresponding to the i-th of the SCM 6. The circuit 11 reads the i-th words of the SWM 7 and the SCM 6, accesses the RAM 3 in accordance with their contents, and reads the data to be sent. At this time, it performs "0" insertion and CRC operation in accordance with the HDLC procedure, edits eight bits, which can be currently sent out as send data, and writes them into the shift register 13 (step S3). The circuit 11 writes into the SWM 7 as control information the interim result of the CRC operation of the send data and bit position information (to be described in further detail below) (step S4). If all the data to be sent have been sent out (step S5), the SWM 7 is caused to store this fact, and sends out a total of 16 CRC bits at the time of transmission thereafter (step S6). Upon completion of data transmission, the fact is made known to the processor 1 by writing a completion report into the FIFO memory 10 (step S7).

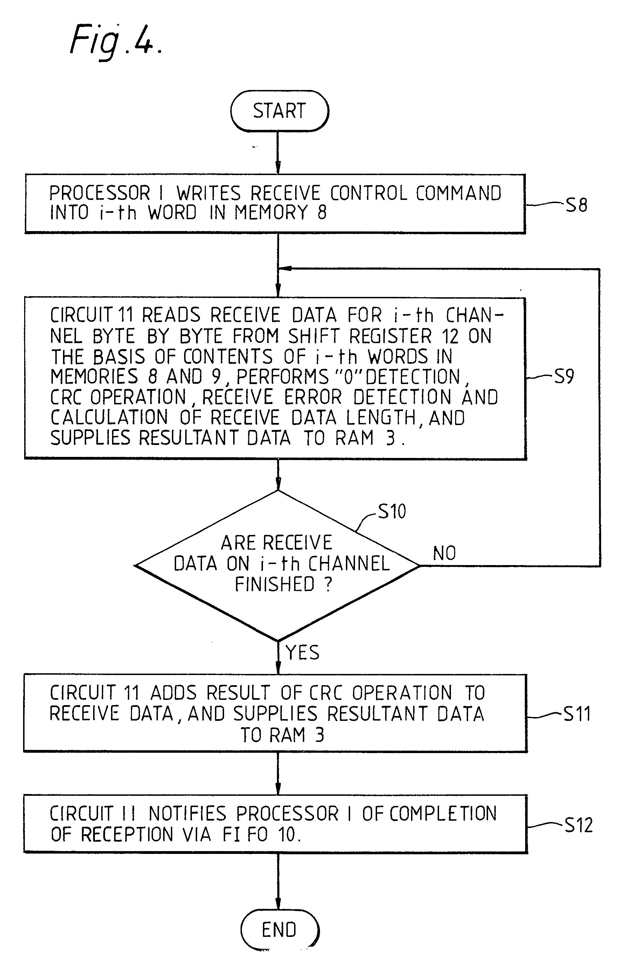

Next will be outlined the receive operation according to the present invention with reference to FIG. 4. Data reception is started by writing a receive control command from the processor 1 into the RCM 8 (step S8). The receive control command includes the leading address of the area for storage of received data on the RAM 3 and a data length. In the RWM 9 is stored control information for the receive operation. The circuit 11 reads the i-th words of the RWM 9 and the RCM 8, and inputs 8-bit parallel data from the shift register 12. Then the circuit 11 deletes "0" from the currently received data on the basis of control information concerning the immediately preceding receive data, which are stored in the RWM 9, edits the "0"-cleared receive data, and writes them into a designated data storage area on the RAM 3. It further writes into the RWM 9 the interim result of CRC operation and bit position information of the received data to prepare for the next operation (step S9). Upon completion of the receive data, the result of CRC operation is stored into the RAM 3 (steps S10 and S11). The circuit 11, upon detection of a termination flag from the input data of 8-bit parallel data, judges it to mean the completion of the receive frame, writes a report of receive completion into the FIFO memory 10, and notifies the microprocessor 1 of the completion (step S12).

Next will be described the detailed structure of this preferred embodiment and its operation in detail.

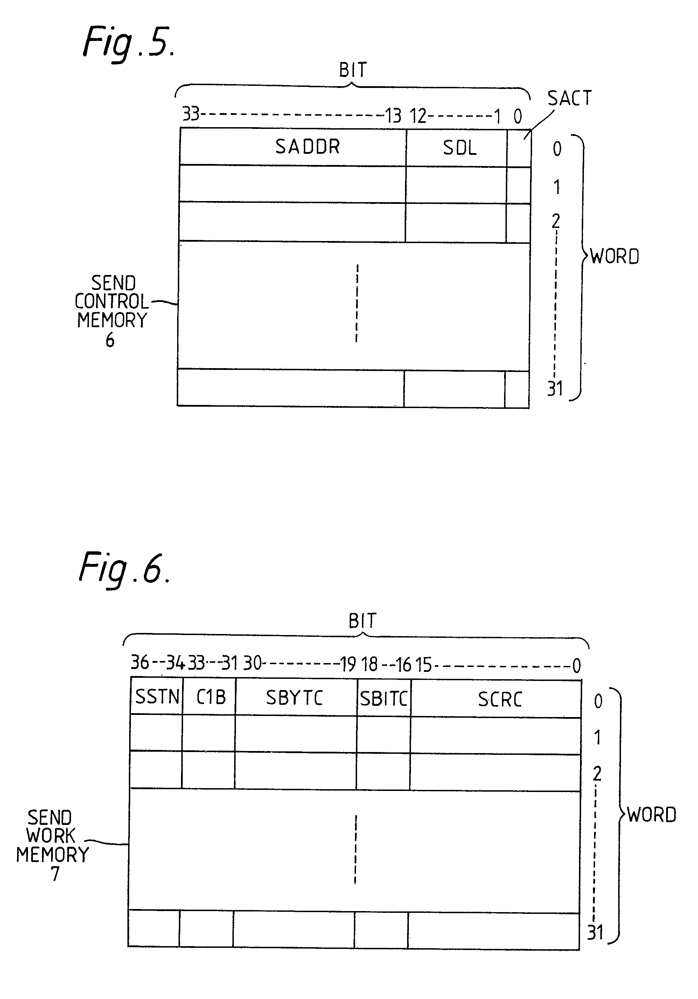

Referring to FIG. 5, the SCM 6, which is a 34-bit x 32-word (channel) memory, stores three kinds of information, including SACT, SDL and SADDR, as (34-bit) control commands for each channel.

SACT (sending activation, 1 bit) indicates whether or not receive processing for the pertinent channel is already started, with "0" denoting "not activated" and "1", "activated".

SDL (send data length in bytes, 12 bits) indicates the length of the data to be sent on the channel in bytes (0 to 4095 bytes) (1 byte = 8 bits).

SADDR (data address to be sent, 21 bits) indicates the leading address on the RAM 3 in which the data to be sent on the channel are stored.

Referring now to FIG. 6, the SWM 7, which is a 37-bit x 32-word memory, stores five kinds of information, including SCRC, SBITC, SBYTC, C1B and SSTN, as (37-bit) control information for each channel.

SCRC (send CRC operation working area, 16 bits) indicates the interim result of CRC operation for sending.

SBITC (send bit counter, 3 bits) indicates, when the data to be sent are read out of the RAM 3, from which the sending should start.

SBYTC (send byte counter, 12 bits) indicates where, denoted in a byte count, the data to be sent are located in the area on the RAM 3 indicated by the SADDR (FIG. 5).

C1B (consecutive 1 bit, 3 bits) indicates the number of "1" bits consecutively sent (at the end of data) during the previous processing.

SSTN (send status number, 3 bits) indicates the sending state of the pertinent channel, with "0" denoting "flag sending"; "1", "flag and data sending"; "2", data sending"; "3", "data and CRC bits sending"; "4", "CRC bits sending"; and "5", "CRC bits and flag sending".

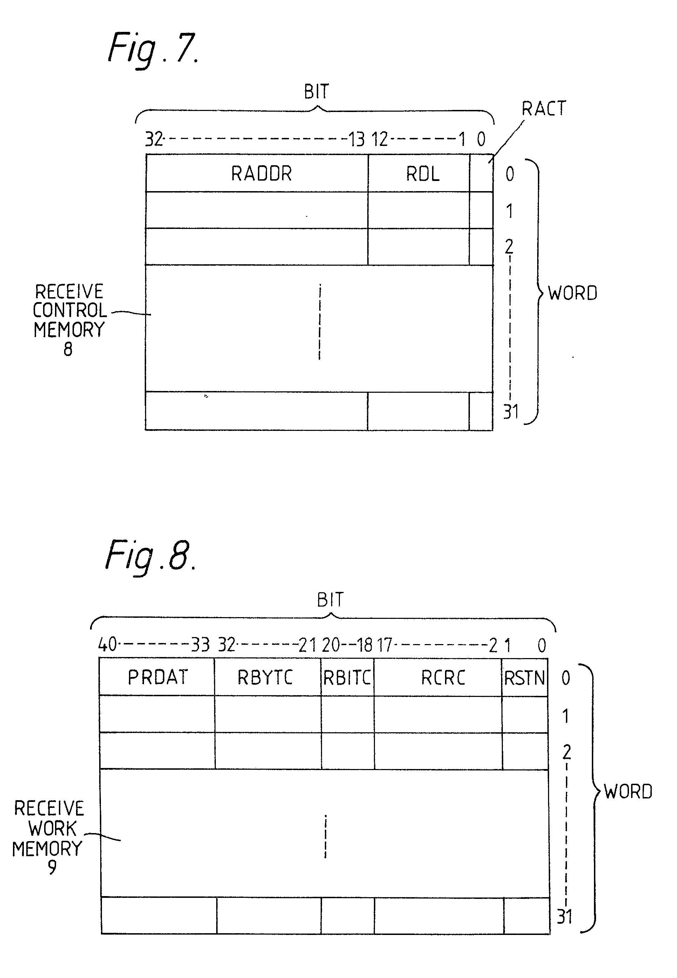

Referring to FIG. 7, the RCM 8, which is a 33-bit x 32-word memory, stores three kinds of information, including RACT, RDL and RADDR, as (33-bit) receive control commands for each channel.

RACT (receiving activation, 1 bit) indicates whether or not receive processing for the pertinent channel is already started, with "0" denoting "not activated" and "1", "activated".

RDL (receive buffer data length in bytes) indicates the length of the area (prepared receive buffer) into which the data to be received on the channel are to be stored on the RAM 3, denoted in bytes (0 to 4095 bytes).

RADDR (receive data buffer address) indicates the leading address of the receive buffer area made ready for the channel on the RAM 3.

Referring now to FIG. 8, the RWM 9, which is a 41-bit x 32-word memory, stores five kinds of information, including RSTN, RCRC, RBITC, RBYTC and PRDAT, as (41-bit) control information for each channel.

RSTN (receives status number, 2 bits) indicates the receiving state of the pertinent channel, with "0" denoting "idle (initial state)"; "1", "flag receiving"; "2", "data receiving"; and "3", "processing after data receiving".

RCRC (receive CRC operation working area, 16 bits) indicates the interim result of CRC operation of receive data.

RBITC (receive bit counter, 3 bits) indicates the bit position of the data to be received.

RBYTC (receive byte counter, 12 bits) indicates where, denoted in a byte count, the receive data are to be stored on the RAM 3.

PRDAT (previously received data, 8 bits) indicates the data previously received (including "0" insertion).

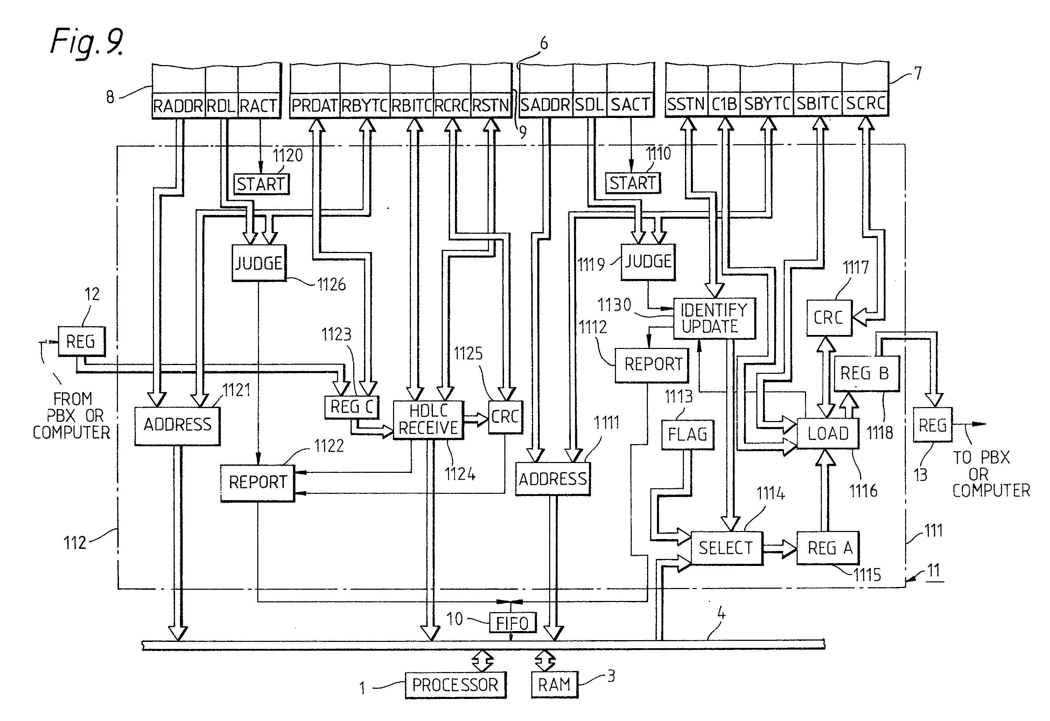

Referring next to FIG. 9, the circuit 11 consists of a send control unit 111 and a receive control unit 112.

The unit 111 has a send starting circuit 1110; an address generating circuit 1111 for generating the address at which the data to be sent is read out of the RAM 3; a send report editing circuit 1112 for editing, upon completion of the send processing, information reporting the completion and inputting the report to the FIFO 10; a flag pattern generating circuit 1113; a selector 1114 for selecting either data on the bus 4 (i.e. the data read out of the RAM 3) or a flag pattern; a (16-bit) register A 1115; a (8-bit) register B 1118; a CRC operating circuit (with a CRC bit generating function) 1117; a loading circuit 1116 for taking out required data from the register A 1115, performing identification of consecutive "1" bits and "0" insertion, editing the 8-bit data to be currently sent on the pertinent channel into their final form, and storing them into the register B 1118; a judging circuit 1119 for judging the completion of data sending by comparing the SDL and the SBYTC; and and SSTN identifying and updating circuit 1130.

The SCM 6 and the SWM 7 are made ready for reading at a certain early point of time during the aforementioned send control period from $t_i$ to $t_i + \Delta t/2$ and, as soon as information corresponding to the i-th channel is read into the unit 111, only the SWM 7 is made ready for writing at a certain late point of time during the send control period, information required for the next processing being written into it (i.e. the SWM 7 is updated).

The selector 15 in FIG. 1 connectes the count output 141 and the address data 51 to the address outputs 151 and 152, respectively, during the aforementioned send control period ($t_i$ to $t_i + \Delta t/2$), while it connects the count output 141 and the address data 51 to the address outputs 152 and 151, respectively, during the receive control period ($t_i + \Delta t/2$ to $t_{i+1}$).

The unit 112 has a receive starting circuit 1120; an address generating circuit 1121 for generating the address at which the data are to be written into the RAM 3; a receive report editing circuit 1122 for editing report information for the processor 1 and inputting it to the FIFO 10; a (16-bit) register C 1123; an HDLC receiving circuit 1124; a CRC operating circuit (for receiving use) 1125; and a judging circuit 1126 for judging any overlength of the receive data by comparing the RDL and the RBTYC. The HDLC receiving circuit 1124 performs identification of data patterns, "0" deletion and updating of RSTN. The RCM 8 and the RWM 9 are made ready for reading at a certain early point of time during the aforementioned receive control period from $t_i + \Delta t/2$ to $t_{i+1}$, while only the RWM 9 is made ready for writing at a certain late point of time during the receive control period.

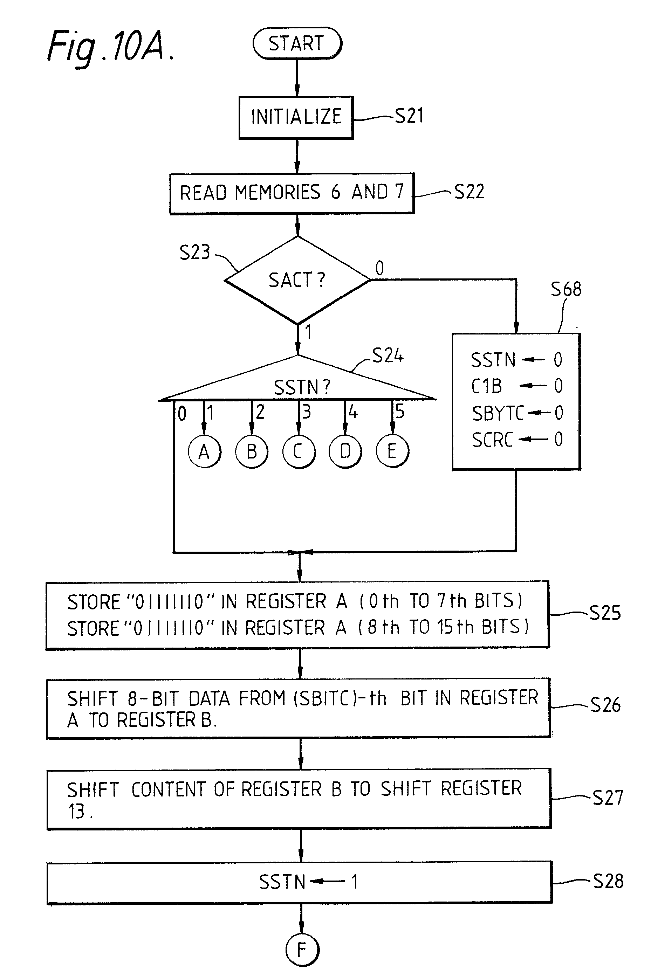

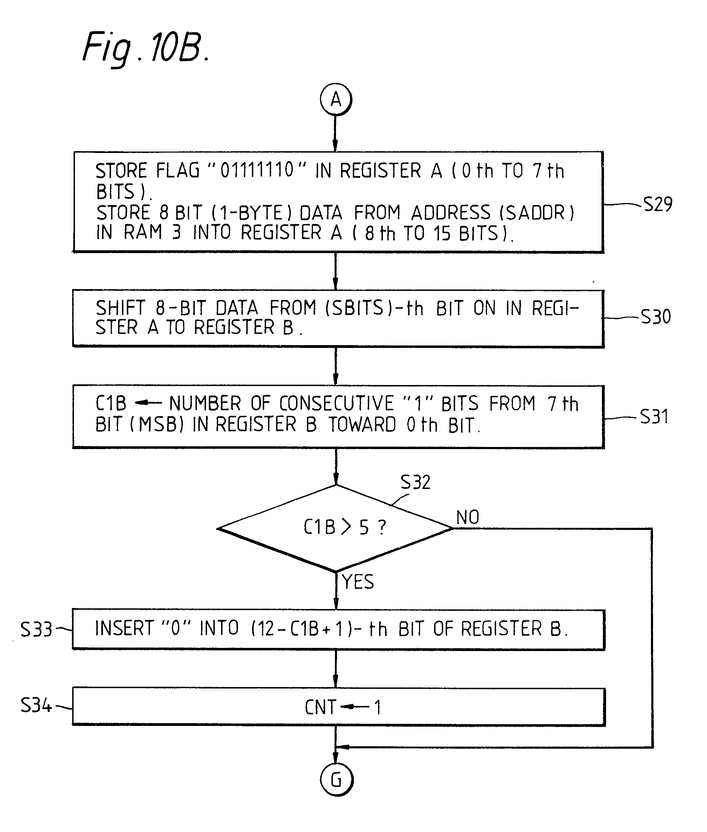

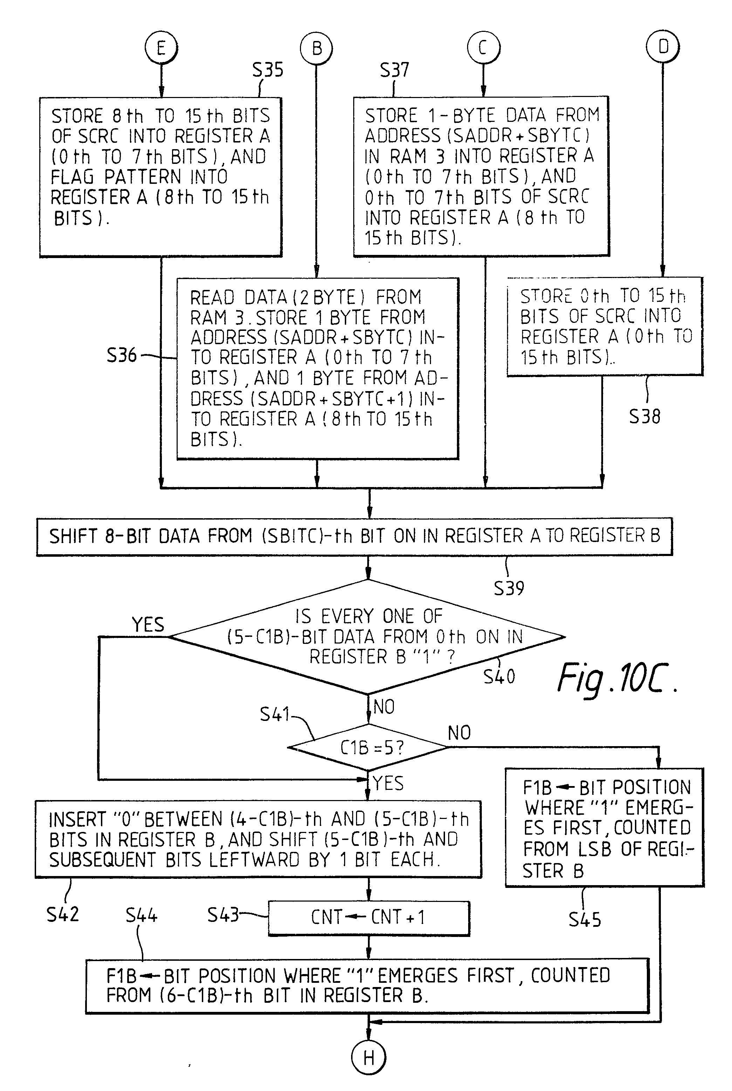

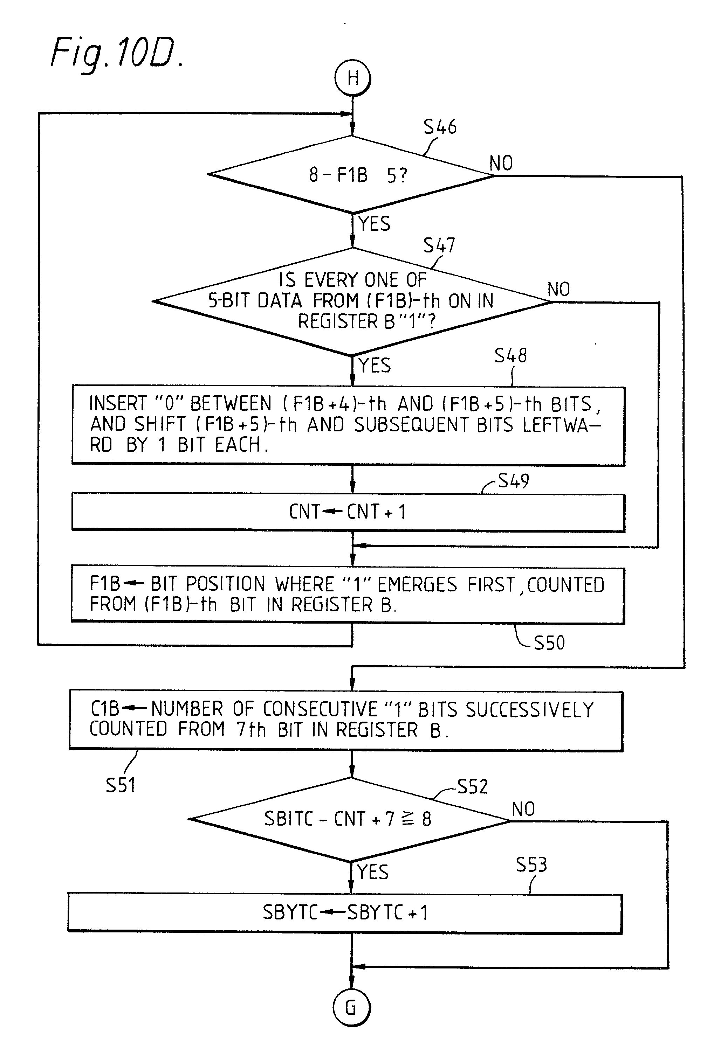

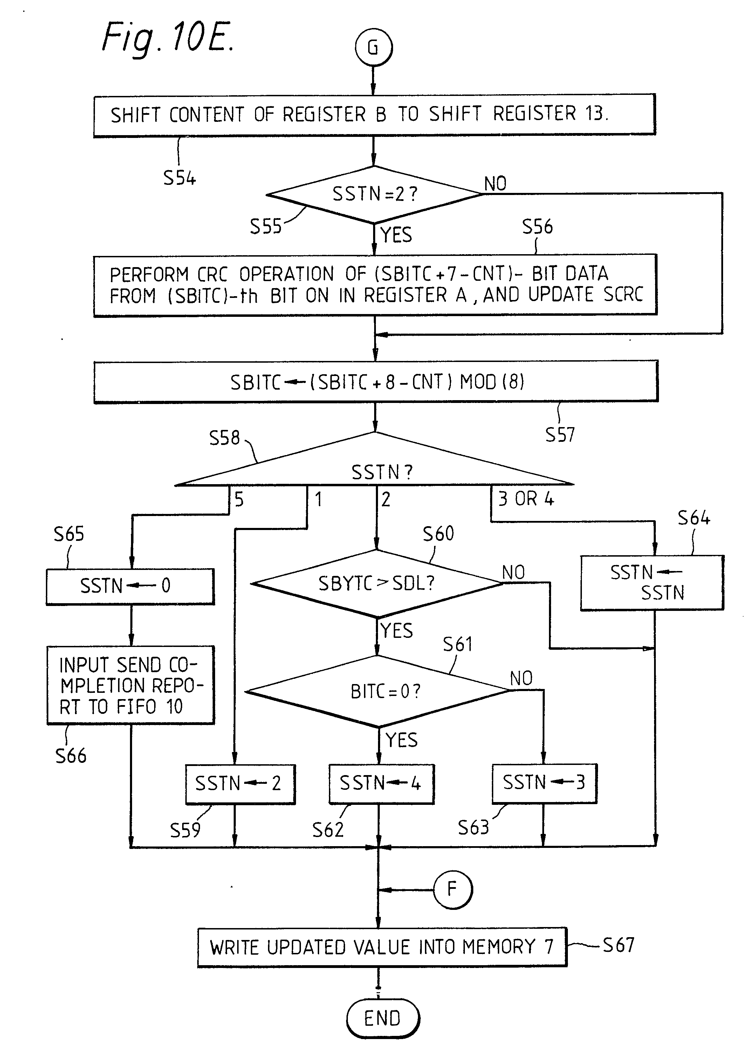

Next will be described in detail the send operation with reference to FIGS. 9 and 10A to 10E. FIGS. 10A to 10E are flow charts showing the details of the send operation. The series of actions from the start till the end of sending will be described with reference to these flow charts.

The series of procedures shown in FIGS. 10A to 10E is repeated for each time-division channel on the transmission path 17. Thus, these procedures repeat a cycle started at $t_i$ mentioned above and ending by the time $\Delta t/2$ passes.

In this series of procedures (steps S21 to S68), steps S21 to S22 constitute initialization (preprocessing) of the unit 111; step S23, judgment processing for send operation start; step S24, processing to determine the current operation; steps S25 to S28, send processing for flags alone; steps S29 to S34, processing the ensure sending one leading flag without fail; steps S35 to S38, processing to read data corresponding to the current send operation; steps S39 to S54, processing to edit and send the HDLC data to be sent; and steps S55 to S67, postprocessing in preparation for the next send operation. In particular, steps S31 to S34 and S39 to S51 indicate "0" insertion processing by an HDLC procedure; steps S52 to S53, updating processing of the number of bytes already sent; and steps S56 to S57, CRC operation (for sending) processing.

Next will be described the processing procedures with reference to a specific example. CNT and F1B here denote data held in the circuit 1116.

It is now supposed that data of (X) bytes beginning with "1111110011011111...." are to be sent out on the 7th channel, and these data are written beginning at the (Y)-th byte address on the RAM 3. In this preferred embodiment, though a flag pattern is sent out to detect trouble on the transmission path even when the channel is idle (the SACT = "0"), this is no substantial send operation, but another fixed pattern may as well be sent or no bit stream need be sent at all.

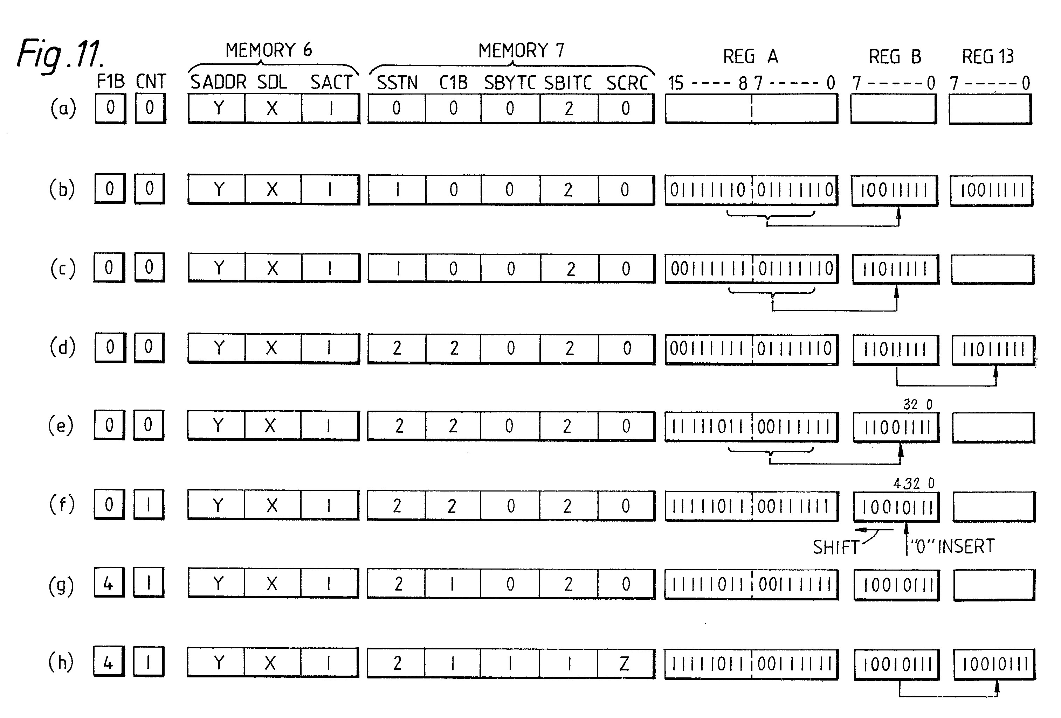

The content of the SCM 6 is initialized by the processor 1, and that of the SWM 7, except the SBITC, is initialized at step S68. The SBITC, in other words, indicates the number of bits sent immediaitely before, which is tentatively supposed to be "2" here, in a byte, provided to correct the gap between the flag pattern or the send data managed byte by byte on the RAM 3 and the send channel (a 1-byte equivalent). The processor 1 writes the send data into the RAM 3 via the bus 4 while feeding an address "7" (the channel number) to the SCM 6 via the interface 5 and the selector 15 to write a control command (the SACT = "1", the SDL = "X", the SADDR = "Y") via the interface 5. This state is shown in FIGS. 11(a).

Afterwards, when the output of the counter 14 reaches "7" and the procedure shown in FIGS. 10A to 10E is begun for the 7th channel, first the data CNT and F1B held in the circuit 1116 are cleared, and the registers and circuits in the unit 111 and initialized (step S21). The count output (indicating the channel number) from the counter 14, while being supplied to the SWM 7 as the read address, passes the selector 15 only during the aforementioned period of $t_i$ to $(t_i + \Delta t/2)$ to be fed to the SCM 6 as well, and the send control unit 111 reads out the control command and control information concerning the 7th channel (step S22).

Next, as the circuit 1110 checks the value of the SACT (step S23), send operation is started as the value is "1". Since no send data had been generated on the 7th channel at the time of previous processing, the SSTN equals "0" (step S24), and an instruction from the circuit 1130 having identified this SSTN value causes the selector 1114 to select the output "01111110" from the flag pattern generating circuit 1113. Two flag patterns are loaded into the 16-bit register A (step S25), and the data of the 2nd through 9th bits (the SBITC = "2") of the register A 1115 are shifted by the circuit 1116 to the shift register 13 via the register B 1118 (steps S26 and S27) to send these serial data on the 7th channel. After that, the circuit 1130 turns the SSTN to "1" (step S28), writes a new value into the SWM 7 (step S67) and completes the current processing to make ready for the next round of data sending. The states of the memories and registers at this point of time are shown in FIG. 11(b).

Next, when the time again comes for processing on the 7th channel, send processing is started (steps S21 to S23) and, since the SSTN is "1", the selector 1114 causes a flag pattern to be stored in least significant 8 bits (the 0th through the 7th bits) of the register A 1115. Meanwhile, into the most significant 8 bits (the 8th through 15th bits) of the register A 1115 are stored a 1-byte equivalent of send data, "00111111", which are read out of an area on the RAM 3, designated by the address generating circuit 1111, from which the SADDR was read out (step S29). Then, the circuit 1116 causes the 2nd through 9th bits (the SBITC = "2") of the register A 1115 to be stored into the register B 1118 (step S30), and the number of consecutive "1" bits from the 7th on is counted to obtain the C1B (step S31) (FIG. 11(c)). If this C1B is greater than 5, "0" is inserted not to let six "1" bits consecutively emerge, and "1" is substituted for the CNT (steps S32 to S34). The CNT indicates how many times "0" has been eventually inserted into the 8-bit data sent out on the currently used channel in accordance with the HDLC procedure, and accordingly its maximum value is "2". Since the C1B equals "2" in this case, no "0" incertion takes place, so that the CNT remains 0, and the content of the register B 1118 is shifted as it is to the shift regisrer 13 and sent out on the transmission path 17 (step S54). The identification of the SSTN value (step S55) results in the determination of the need for CRC operation (step S56), and the SBITC value is updated (step S57). (m)MOD(n) is defined to be the remainder of the division of an integer m by another integer n. The value of the SBITC here remains "2". Now, since the SSTN is currently "1" (step S58), the SSTN for the next round is updated to "2" so that data alone be sent, and the updated SSTN is written into the SWM 7 to complete the processing (steps S59 and S67). The state at this point of time is shown in FIG. 11(d).

In the next processing of the 7th channel, as the SSTN is "2" at step S24, the address generating circuit 1111 causes a 2-byte equivalent of data, "1111101100111111" to be stored from the RAM 3 into the register A 1115 (step S36). As only a 2-bit equivalent of data, less than 1 byte, have been sent, the SBYTC is "0". As the first two bits of this data stream have already been sent, an 8-bit equivalent of data from the 2nd bit of the register A 1115 (the SBITC = "2") are shifted to the register B (step S39) (FIG. 11(e)). As the trailing part of the data sent immediately before had two consecutive "1" bits, the circuit 1116 checks the number of consecutive "1" bits in the leading part of the data in the register B 1118 to be sent out this time (step S40). As there are five consecutive "1" bits, "0" is inserted between the 2nd and 3rd bits of the register B 1118, the 3rd and subsequent bits are shifted leftward by one bit each (step S42), and the CNT is counted up by "1" (step S43) (FIG. 11(f)). Then is detected the bit position, F1B = "4", where "1" is to emerge immediately after this inserted "0" (step S44). As the number of remaining bits, 8 - F1B = 4, is less than six (step S46), no more "0" insertion can take place, so that only the number of consecutive "1" bits from the 7th bit is counted as the new C1B (step S51). The state here is shown in FIG. 11(g).

If there are six or more remaining bits at the step S46, it is checked if there is a stream of five consecutive "1" bits among them (steps S47 and S50) to determine the necessity of "0" insertion (steps S48 and S49).

Then the circuit 1111 updates the byte of which data sending has been completed (steps S52 and S53), the content of the register B 1118 is shifted to the shift register 13, and the data are sent on the 7th channel (step S54). At the same time, the circuit 1117 performs CRC operation of the data in the register A 1115 totaling seven bits, comprising the 2nd through the 8th, and its interim result z is stored into the SCRC (step S56). Further, as the value of the SBITC is altered by "0" insertion, it is also updated (step S57). Next, the circuit 1119 checks if all the data to be sent have been sent (steps S60 and S61), and determines the next process accordingly (steps S62 and S63) (FIG. 11(h)). Thereafter, the procedure at the SSTN = "2" is repeated in the same way, while the SSRC is successively updated by the circuit 1117.

Upon completion of the sending of the data stored on the RAM 3 to be sent out, the SSTN is updated at steps S62, S63 and S64 to "3" or "4" to send out the SCRC and, in the next round of processing, the SCRC (comprising 16 bits without taking account of "0" insertion) which is the result of CRC operation begins to be sent (steps S35, S38 and S39 to S54). Upon completion of the sending of the SCRC at the end of processing at the SSTN = "5", the circuit 1130, having been notified of this completion by the circuit 1116, turns the SSTN to "0" (step S65), and gives an instruction to the circuit 1112 to input a sending completion report to the FIFO 10 to notify the processor 1 (step S66). In the next processing, the flag is sent out.

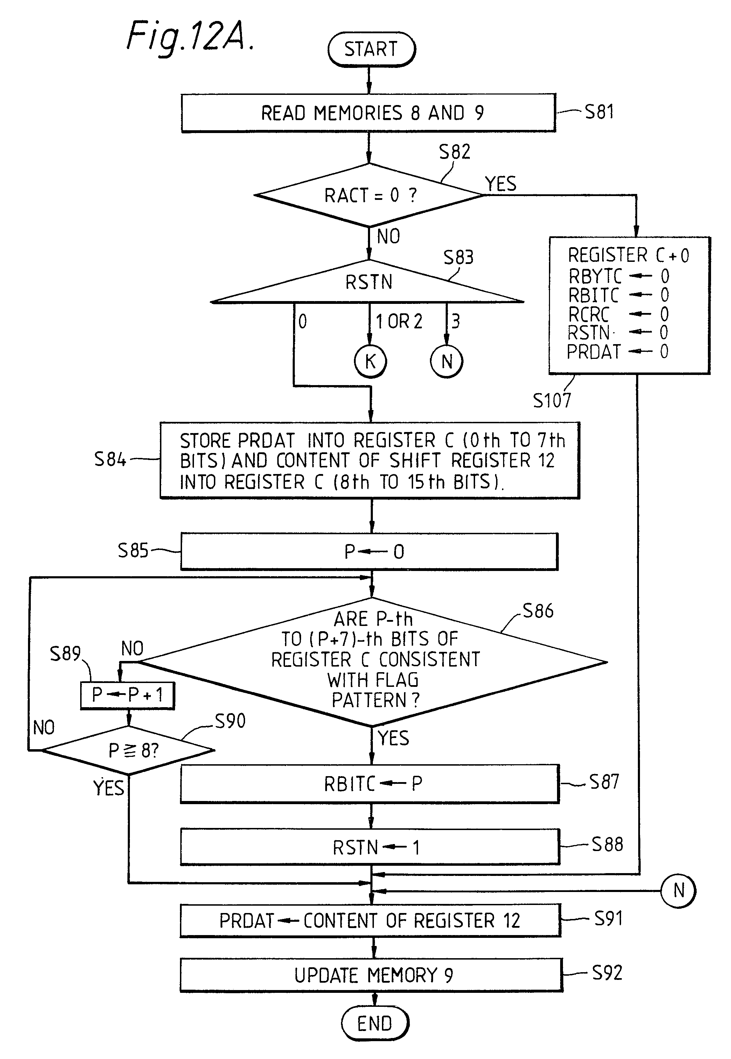

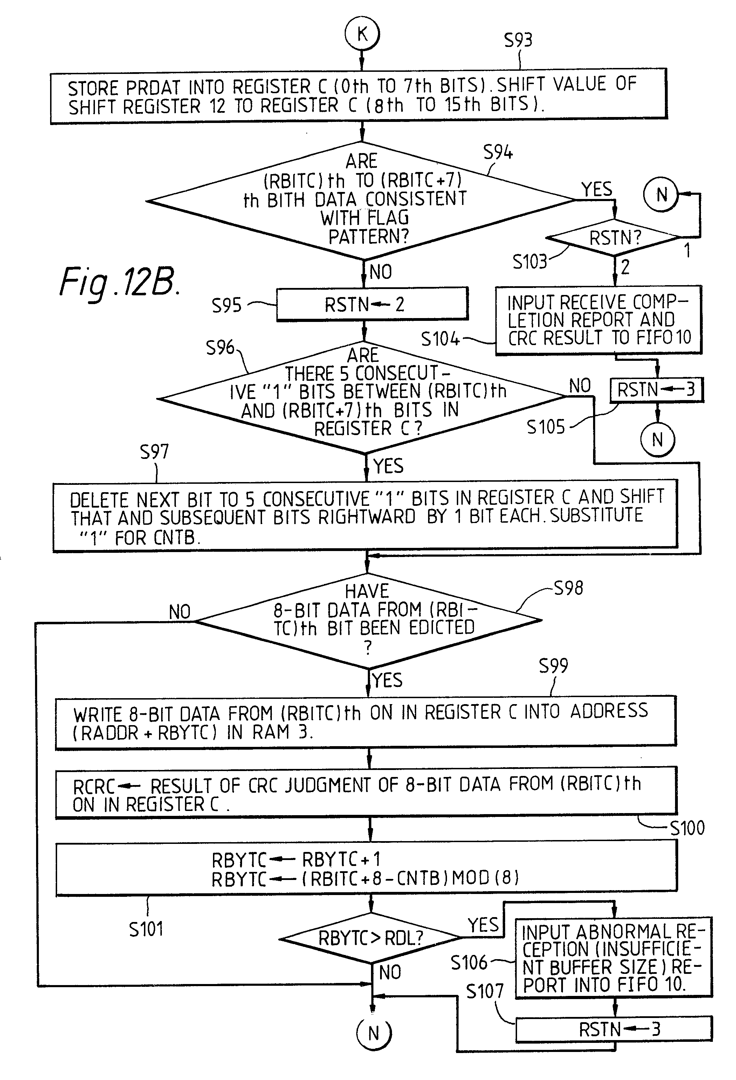

Now will be described in detail the receive operation with reference to FIGS. 12A and 12B.

This series of steps is repeated for each time-division channel on the transmission path 16, i.e. the processing is started and completed during the aforementioned period of $(t_i + \Delta t/2)$ to $t_{i+1}$.

In this procedure of processing, in particular steps S81 constitutes reading out of the memories 8 and 9; step S82, judgment of whether or not receive operation has been started; step S83, determination of the current operation; steps S84 to S88, detection of a flag pattern from receive data; steps S93 to S98, "0" deletion from receive data; steps S99 and S101, successive writing of received and edited data into a designated area on the RAM 3; step S100, CRC operation (for receiving); steps S103 to S105, notification of completion of normal reception; and steps S102 and S106 to S107, abnormality notification for abnormal reception.

Next will be described the procedure of processing with reference to a specific example, in which HDLC data "11111100110....", taken up in the foregoing description of send processing, are to be received on the 7th channel.

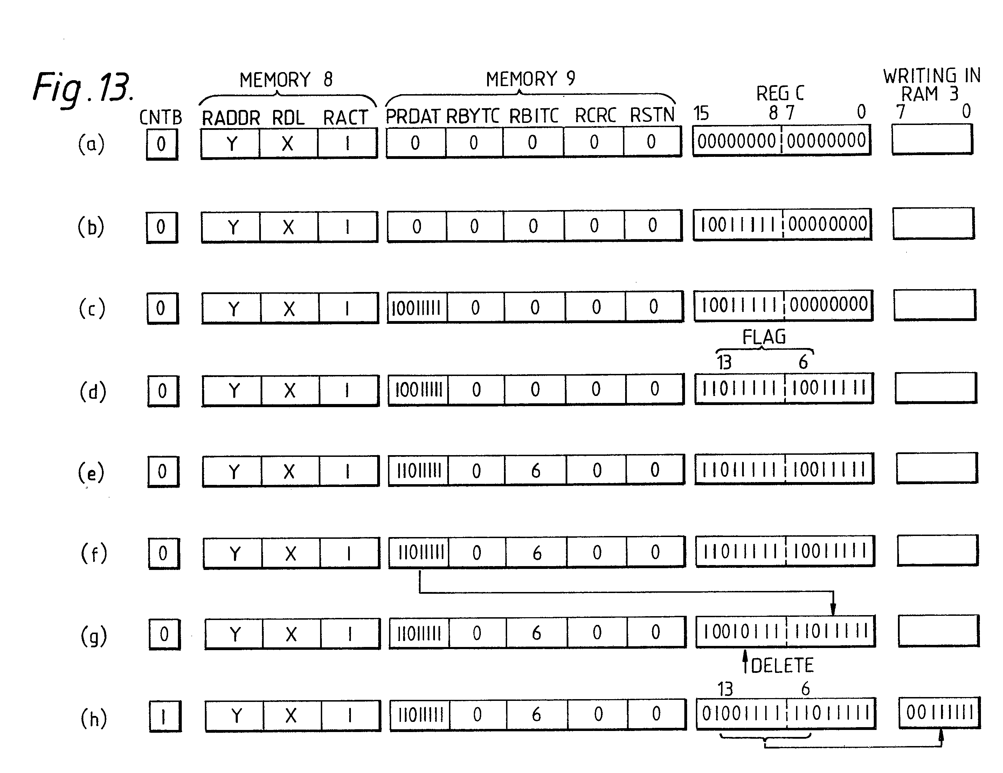

First, the processor 1 writes in advance in its idle time a control command into the 7th word of the RCM 8 (FIG. 13 (a)). Afterwards, when the time comes for receive processing on the 7th channel, the unit 112 is initialized and reads the contents of the RCM 8 and the RWM 9 (step S81). The circuit 1120 identifies the value of the RACT (step S82). As the RACT equals "1" now, receive operation is started, and the circuit 1124 identifies the value of the RSTN (step S83). When the RACT is "0", the corresponding words in the register C 1123 and the RWM 9 are already cleared (step S107) and, in this preferred embodiment, a flag pattern has arrived (steps S91 and S92) even in this state, but the receive control unit 112 does not recognize it as such.

At step S83, as the idleness in the immediately preceding round is identified, the PRDAT (now comprising "0" bits alone) indicating the previously received data is stored into the register C 1123 (the 0th to 7th bits), and the data received by the shift register 12 are stored into the register C 1123 (the 8th to 15th bits) (step S84). Now supposing that the sending source sent a flag pattern at the SBITC = "2", the state of the register C 1123 will be as shown in FIG. 13(b). Since only a deformed flag is received, no flat pattern is detected (steps S86, S88 and S90), and the first round of processing is completed by storing the current receive data into the PRDAT (steps S91 to S92) (FIG. 13 (c)).

In the next round of processing, as the RSTN remains "0", the processing of steps S84 to S86 again takes place, but this time, as shown in FIG. 13(d), a flag pattern can be detected at step S86 when a variable P is "6", so that this P (i.e. the position of a break in the flag pattern) is taken as the RBITC (step S87), and the RWM 9 is updated with the RSTN set to "1" (step S88) so that data can be received from the next time on (steps S91 to S92) (FIG. 13 (e)).

In the next round of processing, the RSTN = "1" is detected at step S83 and, as the PRDAT and receive data are inputted to the register C 1123 (step S93), it is checked whether or not the 6th through 13th bits of the register C 1123 constitute a flag pattern (step S94). If they do not, they are judged to be data and, after setting the RSTN to "2" (step S95), it is checked whether or not there are five consecutive "1" bits in the data received (step S96). In the case of this example, as shown in FIG. 13(g), there are consecutive "1" bits from the 6th through 10th of the register C 1123, so that "0" of the 11th bit is deletced and the data from the 12th bit on are shifted rightward (toward the LSB) by one bit each, with "1" denoting the number of "0" deletions entered into the CNTB (within the circuit 1124) (step S97). The circuit 1124 judges whether the 8-bit equivalent of data from the 6th bit in the register C 1123 can be edited or not (step S98). The 6th through 13th bits of the register C 1123 are written into an area on the RAM 3, designated by an address Y (= RADDR + RBYTC) generated by the address generating circuit 1121. On the other hand, CRC operation of these data is performed by the circuit 1125, its interim result being taken as RCRC (step S100). The circuit 1121 counts up the RBYTC by 1, while the RBITC is updated (step S101). Next, the circuit 1126 compares the RBYTC and the RDL to check if the receive data length is greater than the designated data length (step S102), and the RWM 9 is updated to complete the current operation (steps S91 to S92). This processing of data reception is continued either until a flag pattern is detected at step S94 (normal termination) or until the circuit 1126 detects abnormal data reception at step S102 (abnormal termination).

Normal termination is made known by the circuit 1124 to the circuit 1122, which, receiving the CRC operation esult RCRC from the circuit 1125, edits a reception report, inputs it to the FIGO 10 to make it known to the processor 1 (step S104). The RSTN is updated to "3" (step S105).

Abnormal termination is made known by the circuit 1126 to the circuit 1122, which reports it to the processor 1 and, the RSTN is set to "3" (steps S106 and S107). As RSTN is set to "3", receiving operation will no longer take place. After that, as the processor 1, having processed already received data on the RAM 3, rewrites the control command in the RCM 8, the 7th channel returns to an idle state and further enters a receiving state

As the present invention thus makes it possible to perform send and receive operation of n-channel time-division data with a single circuit, the time-division multiplex line need not be separated into individual lines to achieve transmission and reception of HDLC data frames. Nor is required a shift register using a great number of bits, so that the mounting area and cost of the hardware can be substantially reduced.

Although the above described preferred embodiment of the invention uses 32 channels on the time-division multiplex transmission path and eight bits on each channel, application is not restricted to these numbers of channels and bits, but the invention could also be embodied with 24 channels, for instance.

## Claims

1. A system for sending and receiving a HDLC data frame on a time-division multiplex transmission path comprising:

a first m-bit shift register for serial-to-parallel conversion of n-channel (n is a natural number) multiplexed serial receive data, inputted via a time division multiplex signal path, for each of m-bit receive channels;

a second m-bit shift register for parallel-to-serial conversion of n-channel multiplexed parallel send data for each of m-bit send channels and outputting the converted data to a multiplex signal path;

data memory means for storing send data and receive data for each of said n-send and receive channels;

send control command memory means for storing send control commands including a sending instruction and information concerning the location of send data on said data memory means for each of said n-send channels;

receive control command memory means for storing receive control commands including a receiving instruction and information concerning the location of receive data on said data memory means for each of said n-receive channels;

send work memory means for storing control information required in processing the sending of said send data in a time-division manner for each of said n-send channels;

receive work memory means for storing control information required in processing the receiving of said receive data in a time-division manner for each of said n-receive channels;

receive control means for inputting from said first shift register receive data of each receiving channel at m-bit intervals, achieving receive control in an HDLC procedure and storing the data in said data memory means; and

send control means for reading out of said data memory means send data of each send channel at m-bit intervals, achieving send control in an HDLC procedure and outputting the data to said second shift register;

wherein said send control means, so that send control for each send channel can be achieved in a time-division manner within the period of time allocated for the pertinent channel, reads out of said send work memory means said control information concerning the channel through which sending has been completed within said period of time, achieves send control and, after editing m-bit data for the current sending, updates said control information in said send work memory with respect to said currently sent data, and

said receive control means, so that receive control for each receive channel can be achieved in a time-division manner within the period of time allocated for the pertinent channel, reads out of said receive work memory said control information concerning the channel through which reception has been completed within said period of time, achieves receive control over the m-bit data for the current reception and updates said control information in said receive work memory with respect to said currently received data.

2. A system for sending and receiving a HDLC data frame on a time-division multiplex transmission path, as claimed in Claim 1, wherein said control information in said send work memory includes information indicating the number of consecutive "1" bits in the trailing part of the data sent immediately before on the pertinent send channel so that "0" insertion can be achieved in accordance with the HDLC procedure.

3. A system for sending and receiving a HDLC data frame on a time-division multiplex transmission path, as claimed in Claim 1, wherein said control information in said send work memory includes information indicating the interim result of the CRC operation of the data already sent in and before the immediately preceding processing on the pertinent sending channel.

4. A system for sending and receiving a HDLC data frame on a time-division multiplex transmission path, as claimed in Claim 1, wherein said control information in said send work memory includes information indicating the leading bit position of the data to be currently sent on the pertient channel with respect to send data managed on said data memory means on a byte-by-byte basis.

5. A system for sending and receiving a HDLC data frame on a time-division multiplex transmission path, as claimed in Claim 1, wherein said control information in said receive work memory includes information indicating the interim result of the CRC operation of the data already received in and before the immediately preceding processing on the pertinent receive channel and stored into said data memory means.

6. A system for sending and receiving a HDLC data frame on a time-division multiplex transmission path, as claimed in Claim 1, wherein said control information in said receive work memory includes data received in the immediately preceding processing on the pertinent receive channel and information indicating the leading position of the data to be currently subjected to receive control in accordance with the HDLC procedure in the bit stream combining said data received in the immediately preceding processing and the currently received data on the pertinent receive channel.

# Fig.1.

FROM PBX OR COMPUTER → 16 → SHIFT REGISTER (12) → SENDING AND RECEIVING CONTROL CIRCUIT (11) → SHIFT REGISTER (13) → 17 → TO PBX OR COMPUTER

SEND CONTROL MEMORY (6)

SEND WORK MEMORY (7)

RECEIVE CONTROL MEMORY (8)

RECEIVE WORK MEMORY (9)

FI FO MEMORY (10)

FROM EXTERNAL OR INTERNALLY GENERATED

151

152

SELECTOR

61

81

18

COUNTER (14)

15

141

51

19

MICROPROCESSOR INTERFACE — 5

MICRO-PROCESSOR — 1

ROM — 2

RAM — 3

4

EP 0 323 222 A2

# Fig.2.

(a) LINE 16,17 — 1 FRAME (256 BITS) — 8 BITS — CH0 | CH1 | CH2 | CH3 | // | CH30 | CH31 | CH0 | CH2

(b) DATA FORMAT OF CH0 — FLAG | HDLC DATA | CRC | FLAG

21    22    23    21

EP 0 323 222 A2

EP 0 323 222 A2

## Fig. 3.

```
        ( START )
            |
            v
+---------------------------------------+
| PROCESSOR 1 SETS SEND DATA FOR i-th    |——S1
| CHANNEL IN RAM 3.                       |
+---------------------------------------+
            |
            v
+---------------------------------------+
| PROCESSOR 1 WRITES SEND CONTROL         |——S2
| COMMAND INTO i-th WORD IN MEMORY 6.     |
+---------------------------------------+
            |
            v
+---------------------------------------+
| CIRCUIT 11 READS SEND DATA FOR i-th     |
| CHANNEL BYTE BY BYTE FROM RAM 3 ON THE  |
| BASIS OF CONTENTS OF i-th WORDS IN      |——S3
| MEMORY 6 AND MEMORY 7, PERFORMS CRC     |
| OPERATION AND "0" INSERTION, AND        |
| SUPPLIES RESULTANT DATA TO SHIFT        |
| REGISTER 13.                            |
+---------------------------------------+
            |
            v
+---------------------------------------+
| CIRCUIT 11 WRITES INTERIM RESULT OF CRC |
| OPERATION AND BIT POSITION INFORMATION  |——S4
| OF SEND DATA INTO MEMORY 7.             |
+---------------------------------------+
            |
            v
           S5
      / ARE SEND DATA \     NO
     <  ON i-th CHANNEL >——————————┐
      \   FINISHED ?   /           |
            |                      |
           YES                     |
            v          S6          |
+---------------------------------------+
| CIRCUIT 11 ADDS RESULT OF CRC OPERATION |
| TO SEND DATA, AND SUPPLIES RESULTANT    |
| DATA TO SHIFT REGISTER 13.              |
+---------------------------------------+
            |
            v
+---------------------------------------+
| CIRCUIT 11 NOTIFIES PROCESSOR 1 OF       |——S7
| COMPLETION OF SENDING VIA FIFO 10       |
+---------------------------------------+
            |
            v
          ( END )
```

## Fig.4.

```
            ┌─────────┐
            │  START  │
            └─────────┘
                 │
                 ▼
┌─────────────────────────────────────────────┐
│ PROCESSOR I WRITES RECEIVE CONTROL COMMAND   │──── S8
│ INTO i-th WORD IN MEMORY 8                   │
└─────────────────────────────────────────────┘
                 │
                 ▼ ◄──────────────────────────────┐
┌─────────────────────────────────────────────┐  │
│ CIRCUIT 11 READS RECEIVE DATA FOR i-th CHAN- │  │
│ NEL BYTE BY BYTE FROM SHIFT REGISTER 12 ON   │  │
│ THE BASIS OF CONTENTS OF i-th WORDS IN       │  │
│ MEMORIES 8 AND 9, PERFORMS "0" DETECTION,    │──── S9
│ CRC OPERATION, RECEIVE ERROR DETECTION AND   │  │
│ CALCULATION OF RECEIVE DATA LENGTH, AND      │  │
│ SUPPLIES RESULTANT DATA TO RAM 3.            │  │
└─────────────────────────────────────────────┘  │
                 │                                │
                 ▼            S10                 │
              ╱╲                                  │
            ╱    ╲                                │
          ╱  ARE   ╲          NO                  │
        ╱  RECEIVE   ╲──────────────────────────┘
        ╲ DATA ON i-th╱
          ╲ CHANNEL  ╱
            ╲FINISHED╱
              ╲╱? 
                 │
                 │ YES
                 ▼
┌─────────────────────────────────────────────┐
│ CIRCUIT 11 ADDS RESULT OF CRC OPERATION TO   │
│ RECEIVE DATA, AND SUPPLIES RESULTANT DATA    │──── S11
│ TO RAM 3                                     │
└─────────────────────────────────────────────┘
                 │
                 ▼
┌─────────────────────────────────────────────┐
│ CIRCUIT II NOTIFIES PROCESSOR I OF COMPLETION│──── S12
│ OF RECEPTION VIA FIFO 10.                    │
└─────────────────────────────────────────────┘
                 │
                 ▼
            ┌─────────┐
            │   END   │
            └─────────┘
```

## Fig.5.

BIT

| | SADDR | SDL | | WORD |
|---|---|---|---|---|
| 33 — — — — — 13 | 12 — — — 1 | 0 | SACT | |
| | | | | 0 |
| | | | | 1 |
| | | | | 2 |
| | | | | ⋮ |
| | | | | 31 |

SEND CONTROL MEMORY 6

## Fig.6.

BIT

| SSTN | C1B | SBYTC | SBITC | SCRC | WORD |
|---|---|---|---|---|---|
| 36--34 | 33--31 | 30 — — — — 19 | 18 --16 | 15 — — — — — 0 | 0 |
| | | | | | 1 |
| | | | | | 2 |
| | | | | | ⋮ |
| | | | | | 31 |

SEND WORK MEMORY 7

## Fig .7.

BIT

RACT

32 - - - - - - - - - - - 13 12 - - - - - 1 0

| RADDR | RDL | | 0 |
| | | | 1 |
| | | | 2 |

RECEIVE
CONTROL
MEMORY
8

WORD

| | | | 31 |

## Fig .8.

BIT

40 - - - - - 33 32 - - - - - - 21 20 - - 18 17 - - - - - - - 2 1    0

| PRDAT | RBYTC | RBITC | RCRC | RSTN | 0 |
| | | | | | 1 |
| | | | | | 2 |

RECEIVE
WORK
MEMORY
9

WORD

| | | | | | 31 |

Fig. 9.

*Fig.10A.*

```
                    ( START )
                        |
                   [ INITIALIZE ]——S21
                        |
              [ READ MEMORIES 6 AND 7 ]——S22
                        |
        S23            / \
              \      /     \        0
               \    <  SACT ? >————————————————┐         S68
                    \     /                     |          \
                     \ /                        |
                      | 1                       ▼
                     /\                   ┌──────────────┐
                    /  \  ——S24          │ SSTN ←── 0    │
                   / SSTN? \             │ C1B  ←── 0    │
                  /─┬─┬─┬─┬─┬─\          │ SBYTC ←── 0   │
                 0 │1│2│3│4│ 5           │ SCRC ←── 0    │
                   ▼ ▼ ▼ ▼ ▼             └──────────────┘
                  (A)(B)(C)(D)(E)
```

```
┌─────────────────────────────────────────────────────────────┐
│ STORE "01111110" IN REGISTER A ( 0th TO 7th BITS )           │——S25
│ STORE "01111110" IN REGISTER A ( 8th TO 15th BITS )          │
└─────────────────────────────────────────────────────────────┘
                        |
┌─────────────────────────────────────────────────────────────┐
│ SHIFT 8-BIT DATA FROM (SBITC)-th BIT IN REGISTER            │——S26
│ A TO REGISTER B.                                            │
└─────────────────────────────────────────────────────────────┘
                        |
┌─────────────────────────────────────────────────────────────┐
│ SHIFT CONTENT OF REGISTER B TO SHIFT REGISTER              │——S27
│ 13.                                                         │
└─────────────────────────────────────────────────────────────┘
                        |
┌─────────────────────────────────────────────────────────────┐
│                   SSTN ←── 1                                │——S28
└─────────────────────────────────────────────────────────────┘
                        |
                       ( F )
```

## Fig. 10B.

(A)

STORE FLAG "01111110" IN REGISTER A (0th TO 7th BITS).
STORE 8 BIT (1-BYTE) DATA FROM ADDRESS (SADDR) IN RAM 3 INTO REGISTER A (8th TO 15 BITS). — S29

SHIFT 8-BIT DATA FROM (SBITS)-th BIT ON IN REGISTER A TO REGISTER B. — S30

C1B ◄— NUMBER OF CONSECUTIVE "1" BITS FROM 7th BIT (MSB) IN REGISTER B TOWARD 0th BIT. — S31

S32
C1B > 5 ? — NO

YES

S33 — INSERT "0" INTO (12-C1B+1)-th BIT OF REGISTER B.

S34 — CNT ◄— 1

(G)

(E) (B) S37 (C) (D)

S35

STORE 8th TO 15th BITS OF SCRC INTO REGISTER A (0th TO 7th BITS), AND FLAG PATTERN INTO REGISTER A (8th TO 15th BITS).

STORE 1-BYTE DATA FROM ADDRESS (SADDR+SBYTC) IN RAM 3 INTO REGISTER A (0th TO 7th BITS), AND 0th TO 7th BITS OF SCRC INTO REGISTER A (8th TO 15th BITS).

S36

READ DATA (2 BYTE) FROM RAM 3. STORE 1 BYTE FROM ADDRESS (SADDR+SBYTC) IN-TO REGISTER A (0th TO 7th BITS), AND 1 BYTE FROM AD-DRESS (SADDR+SBYTC+1) IN-TO REGISTER A (8th TO 15th BITS).

STORE 0th TO 15th BITS OF SCRC INTO REGISTER A (0th TO 15th BITS)..

S38

SHIFT 8-BIT DATA FROM (SBITC)-th BIT ON IN REGISTER A TO REGISTER B

S39

YES ← IS EVERY ONE OF (5-C1B)-BIT DATA FROM 0th ON IN REGISTER B "1" ?

S40

*Fig.10C.*

NO

S41 C1B =5? NO

YES

INSERT "0" BETWEEN (4-C1B)-th AND (5-C1B)-th BITS IN REGISTER B, AND SHIFT (5-C1B)-th AND SUBSEQUENT BITS LEFTWARD BY 1 BIT EACH.

F1B ← BIT POSITION WHERE "1" EMERG-ES FIRST, COUNTED FROM LSB OF REGI-STER B

S42 S44 S43 CNT ← CNT +1 S45

F1B ← BIT POSITION WHERE "1" EMERGES FIRST, COUNTED FROM (6-C1B)-th BIT IN REGISTER B.

(H)

## Fig.10D.

(H)

S46
8 − F1B ≧ 5? ──NO──→

│ YES

S47
IS EVERY ONE OF
5-BIT DATA FROM (F1B)-th ON IN
REGISTER B "1"? ──NO──→

│ YES

S48
INSERT "0" BETWEEN (F1B+4)-th AND (F1B+5)-th BITS,
AND SHIFT (F1B+5)-th AND SUBSEQUENT BITS LEFTWA-
RD BY 1 BIT EACH.

S49
CNT ← CNT + 1

S50
F1B ← BIT POSITION WHERE "1" EMERGES FIRST, COUNTED
FROM (F1B)-th BIT IN REGISTER B.

S51
C1B ← NUMBER OF CONSECUTIVE "1" BITS SUCCESSIVELY
COUNTED FROM 7th BIT IN REGISTER B.

S52
SBITC − CNT + 7 ≧ 8 ──NO──→

│ YES

S53
SBYTC ← SBYTC + 1

(G)

## Fig. 10E.

(G)

↓

SHIFT CONTENT OF REGISTER B TO SHIFT REGISTER 13.

S54

↓

S55 — SSTN=2 ? —— NO ——→

YES ↓        S56

PERFORM CRC OPERATION OF (SBITC+7-CNT)- BIT DATA FROM (SBITC)-th BIT ON IN REGISTER A , AND UPDATE SCRC

↓

SBITC ← (SBITC + 8 - CNT) MOD (8)

S57

↓

S58 — SSTN ?

| 5 | 1 | 2 | 3 OR 4 |

S65                                                      S64

SSTN ← 0        S60                        SSTN ← SSTN

↓          SBYTC > SDL? —— NO ——→

INPUT SEND CO-MPLETION REPO-RT TO FIFO 10          YES ↓     S61

S66                      BITC = 0 ? —— NO ——→

YES ↓

SSTN ← 2          SSTN ← 4          SSTN ← 3

S59              S62              S63

↓          ←(F)

WRITE UPDATED VALUE INTO MEMORY 7 — S67

↓

( END )

Fig.11.

| | F1B | CNT | MEMORY 6 | | | MEMORY 7 | | | | | REG A | REG B | REG 13 |
|---|---|---|---|---|---|---|---|---|---|---|---|---|---|
| | | | SADDR | SDL | SACT | SSTN | C1B | SBYTC | SBITC | SCRC | 15 ---- 8  7 ----- 0 | 7 ----- 0 | 7 ----- 0 |
| (a) | 0 | 0 | Y | X | 1 | 0 | 0 | 0 | 2 | 0 | | | |
| (b) | 0 | 0 | Y | X | 1 | 1 | 0 | 0 | 2 | 0 | 01111110 01111110 | 10011111 | 10011111 |
| (c) | 0 | 0 | Y | X | 1 | 1 | 0 | 0 | 2 | 0 | 00111111 01111110 | 11011111 | |
| (d) | 0 | 0 | Y | X | 1 | 2 | 2 | 0 | 2 | 0 | 00111111 01111110 | 11011111 | 11011111 |
| (e) | 0 | 0 | Y | X | 1 | 2 | 2 | 0 | 2 | 0 | 11111011 00111111 | 11001111 | |
| (f) | 0 | 1 | Y | X | 1 | 2 | 2 | 0 | 2 | 0 | 11111011 00111111 | 10010111 | |
| (g) | 4 | 1 | Y | X | 1 | 2 | 1 | 0 | 2 | 0 | 11111011 00111111 | 10010111 | |
| (h) | 4 | 1 | Y | X | 1 | 2 | 1 | 1 | 1 | Z | 11111011 00111111 | 10010111 | 10010111 |

(e) 32  0

(f) 4 32  0  SHIFT  "0" INSERT

EP 0 323 222 A2

# Fig.12A.

```
                    ( START )
                        |
                        v
    ┌──────────────────────────────────────┐
    │      READ MEMORIES 8 AND 9           │──── S81
    └──────────────────────────────────────┘
                        |
                        v          S82
              < RACT = 0 ? >────── YES ──────┐
                        |                      │
                       NO                      │
                        v          S83         v
              \      RSTN      /        ┌──────────────────┐
               _____/         │ REGISTER C + 0   │
                |     |     |          │ RBYTC ← 0        │
                0   1 OR 2  3          │ RBITC ← 0        │
                |     |     |          │ RCRC  ← 0        │
                |    (K)   (N)         │ RSTN· ← 0        │
                |     |                │ PRDAT ← 0        │
                |     |                └──────────────────┘
                |     |                   S107   │
                |     v                          │
    ┌──────────────────────────────────────┐    │
    │ STORE PRDAT INTO REGISTER C (0th TO 7th│    │
S84 │ BITS) AND CONTENT OF SHIFT REGISTER 12 │    │
    │ INTO REGISTER C (8th TO 15th BITS).    │    │
    └──────────────────────────────────────┘    │
                        |                         │
                        v                         │
S85 ┌──────────────────────────────────────┐     │
    │               P ← 0                   │     │
    └──────────────────────────────────────┘     │
                        |                         │
                        v                         │
                   /  ARE P-th  \                 │
       NO         / TO (P+7)-th BITS \   S86       │
   S89 ┌───────< REGISTER C CONSISTENT >           │
       │ P ← P+1 │    \  WITH FLAG  /              │
       └─────────┘     \ PATTERN ? /               │
         NO   |             |                      │
          ┌───┘            YES                     │
          v                 v                      │
     < P ≧ 8? > S90  ┌──────────────────┐          │
          |          │   RBITC ← P      │──── S87   │
         YES         └──────────────────┘          │
          |                 |                       │
          |                 v                       │
          |          ┌──────────────────┐          │
          |          │    RSTN ← 1      │──── S88   │
          |          └──────────────────┘          │
          |                 |                       │
          └────────────────>|<──────────────(N)<───┘
                            |
                            v
    ┌──────────────────────────────────────┐
    │ PRDAT ← CONTENT OF REGISTER 12       │──── S91
    └──────────────────────────────────────┘
                            |
                            v
    ┌──────────────────────────────────────┐
    │        UPDATE MEMORY 9               │──── S92
    └──────────────────────────────────────┘
                            |
                            v
                       ( END )
```

EP 0 323 222 A2

**Fig.12B.**

(K)

─── S93
STORE PRDAT INTO REGISTER C (0th TO 7th BITS). SHIFT VALUE OF SHIFT REGISTER 12 TO REGISTER C (8th TO 15th BITS).

S94
ARE (RBITC)th TO (RBITC+7)th BITH DATA CONSISTENT WITH FLAG PATTERN?  — YES → (N)

S103 — RSTN? → 1 → (N)
  │ 2

NO

S95 — RSTN ← 2

S104 — INPUT RECEIVE COMPLETION REPORT AND CRC RESULT TO FIFO 10

S96
ARE THERE 5 CONSECUTIVE "1" BITS BETWEEN (RBITC)th AND (RBITC+7)th BITS IN REGISTER C? — NO → RSTN ← 3 → (N)

S105

YES

S97
DELETE NEXT BIT TO 5 CONSECUTIVE "1" BITS IN REGISTER C AND SHIFT THAT AND SUBSEQUENT BITS RIGHTWARD BY 1 BIT EACH. SUBSTITUTE "1" FOR CNTB.

S98
HAVE 8-BIT DATA FROM (RBITC)th BIT BEEN EDICTED? — NO
YES

S99
WRITE 8-BIT DATA FROM (RBITC)th ON IN REGISTER C INTO ADDRESS (RADDR + RBYTC) IN RAM 3.

RCRC ← RESULT OF CRC JUDGMENT OF 8-BIT DATA FROM (RBITC)th ON IN REGISTER C.

S100

$$RBYTC \leftarrow RBYTC + 1$$
$$RBYTC \leftarrow (RBITC + 8 - CNTB) \, MOD \, (8)$$

S101

RBYTC > RDL? — YES → INPUT ABNORMAL RECEPTION (INSUFFICIENT BUFFER SIZE) REPORT INTO FIFO 10.

S106

NO

S107 — RSTN ← 3

(N)

## Fig.13.

EP 0 323 222 A2

| | CNTB | MEMORY 8 | | | MEMORY 9 | | | | | REG C | | WRITING IN RAM 3 |
|---|---|---|---|---|---|---|---|---|---|---|---|---|
| | | RADDR | RDL | RACT | PRDAT | RBYTC | RBITC | RCRC | RSTN | 15    8 | 7    0 | 7    0 |
| (a) | 0 | Y | X | 1 | 0 | 0 | 0 | 0 | 0 | 00000000 | 00000000 | |
| (b) | 0 | Y | X | 1 | 0 | 0 | 0 | 0 | 0 | 10011111 | 00000000 | |
| (c) | 0 | Y | X | 1 | 10011111 | 0 | 0 | 0 | 0 | 10011111 | 00000000 | |
| (d) | 0 | Y | X | 1 | 10011111 | 0 | 0 | 0 | 0 | 11011111 | 10011111 | |
| (e) | 0 | Y | X | 1 | 11011111 | 0 | 6 | 0 | 0 | 11011111 | 10011111 | |
| (f) | 0 | Y | X | 1 | 11011111 | 0 | 6 | 0 | 0 | 11011111 | 10011111 | |
| (g) | 0 | Y | X | 1 | 11011111 | 0 | 6 | 0 | 0 | 10010111 | 11011111 | |
| (h) | 1 | Y | X | 1 | 11011111 | 0 | 6 | 0 | 0 | 01001111 | 11011111 | 00111111 |

FLAG 13 6

DELETE

13 6